(19) Europäisches Patentamt
European Patent Office
Office européen des brevets

(11) EP 0 645 171 B1

(12) **EUROPEAN PATENT SPECIFICATION**

(45) Date of publication and mention
of the grant of the patent:
**26.11.1997 Bulletin 1997/48**

(51) Int. Cl.⁶: **B01D 53/56**, B01D 53/86,
B01D 53/94, B01J 23/38

(21) Application number: **94104422.4**

(22) Date of filing: **21.03.1994**

(54) **Palladium-alloy catalyst for thermal decomposition of NO**

Palladiumlegierung enthaltender Katalysator zur thermischen Zersetzung von Stickstoffmonoxyd

Catalyseur contenant un alliage de palladium pour la décomposition thermique du monoxyde d'azote

(84) Designated Contracting States:
FR GB SE

(43) Date of publication of application:
**29.03.1995 Bulletin 1995/13**

(73) Proprietor:
**NATIONAL SCIENCE COUNCIL**
**Taipei (TW)**

(72) Inventors:
• **Yeh, Chuin-Tih,**
**Department of Chemistry**
**Hsinchu, 30043 (TW)**
• **Wu, Ren-Jang,**
**Department of Chemistry**
**Hsinchu, 30043 (TW)**
• **Chou, Tsong-Yung,**
**Department of Chemistry**
**Hsinchu, 30043 (TW)**

(74) Representative:
**Boeters, Hans Dietrich, Dr. et al**
**Patentanwälte Boeters & Bauer,**
**Bereiteranger 15**
**81541 München (DE)**

(56) References cited:
WO-A-92/09848          DE-A- 2 450 664
US-A- 4 367 162          US-A- 4 868 149

## Description

Background of the Invention

This invention is associated with the art of producing catalysts for treating $NO_x$ pollutant in exhaust gas. Several processes, e.g. TWC (Three-Way-Catalyst) system for automobiles and SCR (Selective-Catalytic-Reduction) process for stationary plants have been developed for practical application purposes so as to reduce NOx from exhaust gases . In the TWC system, 90% of NO was removed from automobiles exhaust gases as the ratio of Air/Fuel was controlled to around 14.6 (the stoichiometry point). However, NO conversion in lean burn region (Air/Fuel > 14.6) decreased severely with an increase of the Air/Fuel ratio. In the SCR process, NOx was reduced into $N_2$ and $H_2O$ over $V_2O_5/TiO_2$ catalyst by $NH_3$. The SCR process has encountered drawbacks, i. e., high facility and operational-related expenses, and slip of annoying $NH_3$. In the case of a diesel-engine co-generation system, the conversion of NO via SCR process was found decreasing to 30%, as a result of $V_2O_5/TiO_2$ catalyst being poisoned by a high concentration of $O_2$ (5-15%) or $SO_2$ (300-500 ppm) in the exhaust gas [see Catalysis Today ,10 (1991) 57].

A less complicated method for NOx removal is direct thermal decomposition of NO. NO is thermodynamically unstable and tends to decompose into its harmless components, $O_2$ and $N_2$, via reaction (1).

$$NO \leftrightarrow 1/2\ O_2 + 1/2\ N_2 \quad \Delta G° = -86.7\ kJ/mole \tag{1}$$

Several metallic catalysts, e.g. Cu/ZSM-5 (see Japanese Pat No 03-101837), $Ag\text{-}Co_3O_4$ [see Chem. Lett., (1990) 1069.], $Pt/Al_2O_3$ [see Catalysis Today ,10 (1991) 57] and $Pd/MgAl_2O_4$ [see Applied Catalysis, 65 (1990) 11] have been developed for catalyzing the reaction. The maximum catalytic activity was reported at the temperature of 500 °C (85%), 600 °C (47%), 700 °C (62%) and 750 °C (73%) for the respective catalysts. In each parenthesis percentage of the NO conversion was based on $N_2$ formation.

However the catalytic activity of these four catalysts towards NO thermal decomposition decreased with an increasing $O_2$ concentration in the exhaust gas. For example, the $N_2$ conversion for these catalysts was reduced to 2.1% (for Cu/ZSM-5), 0.7% ($Pt/Al_2O_3$), 20% ($Ag\text{-}Co_3O_4$) and 23% ($Pd/MgAl_2O_4$) as the $O_2$ concentration was 10%, 10%, 5% and 2.5% respectively [see Catalysis Today ,10 (1991) 57 and Applied Catalysis, 65 (1990) 11]. Cu/ZSM-5 catalyst almost completely lost its activity in the presence of $SO_2$[see Applied Catalysis.,69(1991)L15. ]. Therefore, commercial application of the above metallic catalysts on the reaction (1) is currently unavailable primarily as a result of the obstacle of poisoning in the presence of $O_2$ or $SO_2$ in the exhaust gas.

In this invention, some supported Pd catalysts were discovered to possess an excellent conversion of NO decomposition (comparable to that of Cu/ZSM-5). The proposed Pd catalysts persist in exhibiting decent catalytic activity in the presence of $O_2$ or $SO_2$. Alloying with Group IB metals as well as adding appropriate promoters also enhance the decomposition activity of these developed Pd catalysts. Therefore, these supported Pd alloy catalysts could be applicable towards NOx thermal decomposition.

## SUMMARY OF THE INVENTION

This invention relates to an improved catalytic composite according to claim 1 for thermal decomposition of NO into $N_2$ and $O_2$. The catalytic composite comprises primarily of a support which is substantially either alumina ($Al_2O_3$) or magnesium aluminate ($MgAl_2O_4$) and an active ingredient of Pd crystallites dispersed thereon. The catalytic activity of the Pd crystallites is improved by adding at least one alloying metal selected from group IB (Cu, Ag and Au) as well as by adding promoters, e.g. potassium ion, oxides of titanium series (Zr,Hf) or lanthanum series (Ce, Nb). Preparation of these invented catalysts was carried out via impregnation method, i.e., an appropriate amount of the said support was immersed into an aqueous solution comprising preferably of nitrate salt of Palladium, nitrate salt of the said alloying metal, (and/or) nitrate salt of promoters.

## DETAILS OF THE INVENTION:

The catalytic activity towards NO thermal decomposition of these invented catalysts depends on the loading of Pd metal, the variety of said support used, the amount of said alloying metal and promoter added. $Al_2O_3$ and $MgAl_2O_4$ were accepted as the support of catalyst since they retained a high surface area at elevated temperature. An appropriate amount of Pd was discovered in the range from 0.05% to 2% (by weight percentage) if the said support is $Al_2O_3$, and from 0.1% to 1% if the said support is $MgAl_2O_4$. One essential feature of this invention is that the catalytic activity of $Pd/Al_2O_3$ or $Pd/MgAl_2O_4$ towards NO thermal decomposition (Table 1) is enhanced by an addition of the said alloying metal as selected from the group IB (Cu, Ag and Au) in the periodic table. The catalytic activity is furthermore enhanced by the addition of the said promoter including potassium ion, oxide of titanium series (Zr,Hf) and lanthanum series (Ce, Nb). An appropriate ratio of Pd to the said alloying metal and the said promoter is in the range of 1~10, 1~20, 10~40,

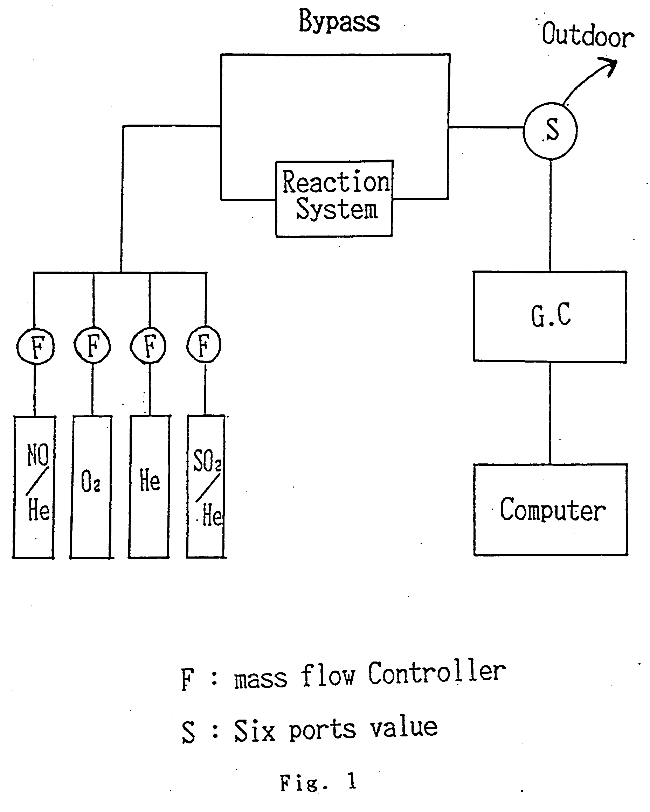

$1\sim20$, $1\sim10$ and $1\sim10$ in weight for Pd/Cu, Pd/Ag, Pd/Au, Pd/Ce, Pd/K and Pd/Zr respectively. The catalytic activity of NO decomposition listed in Table 1 was carried out in a flow reactor described in Fig.1. The flow-rate of the feed gas (comprising 4% NO or 2000 ppm V/V in He) was regulated at 33 ml/min with a mass flow controller (Tylan, FC-280). The reactor was constructed of an 8 mm i.d. quartz tube in which a catalyst sample of 0.8 gram was mounted. Compositions of the outflow gas were analyzed via TCD gas chromatography using porapak Q ($N_2O$) and molecular sieve 5A ($O_2$, $N_2$ and NO) columns. The conversion of NO was estimated from the concentration of NO at the inlet ($[NO]_i$) and the concentration of $N_2$ at the outlet ($[N_2]_o$) of the catalyst bed according to the following equation:

$$N_2 \text{ conversion} = 2[N_2]_o/[NO]_i.$$

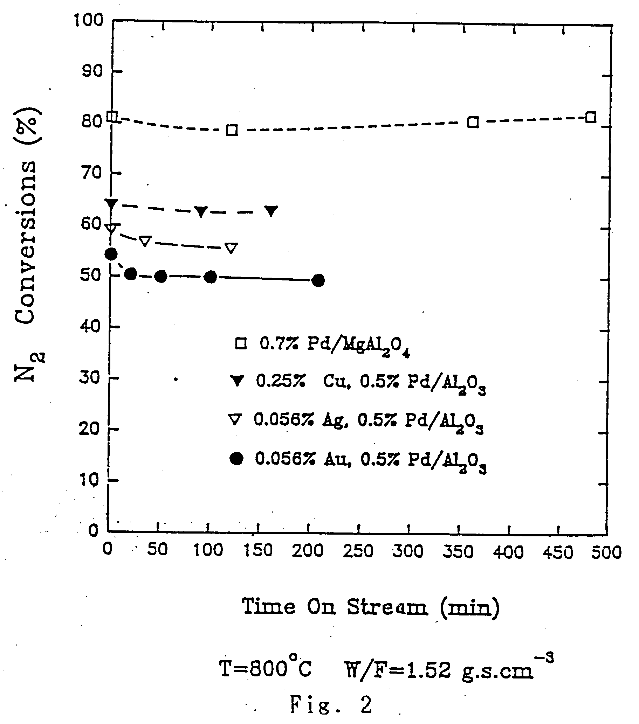

Fig. 2 shows the variation of the $N_2$ conversions with the time on stream of various catalysts.

Comparative examples:

Notably, the $N_2$ conversion of 0.7%Pd/MgAl$_2$O$_4$ catalyst (table 1) at 800 °C is 81%, i.e. much higher than that previously reported for the peroverskite catalyst [Japanese Pat No 01-104345 disclosed] which has a maximum $N_2$ conversion of 69.2%. These invented catalysts possess good thermal stability as well as being immune from the poison of both $O_2$ and $SO_2$, as confirmed from the results in Table 1. Pd/La/Al$_2$O$_3$ catalyst has been reported to possess decent catalytic activity for the removal of NO in the exhaust gas of automobile vehicle as the Air/Fuel ratio is lower than or equal to 14.6 [Ind. Eng. Chem. Prod. Res. Rev., 25(1986) p.202]. However, the catalytic activity of this catalyst sharply decreased as the Air/Fuel ratio became greater than 14.6 (in the fuel lean condition). An enhancement of the catalytic activity towards NO conversion by addition of $TiO_2$ to the Pd/La/Al$_2$O$_3$ was disclosed in US. Pat. No. 5,021,389. However decent activity of this catalyst was also limited to the Air/Fuel ratio in the fuel lean region.

Evidently, the Pd alloy catalysts invented in this report possess the advantages of 1) high thermal stability, 2) decent catalytic activity in the temperature range among 700-900 °C, 3) immuning from the poison of $SO_2$ and $O_2$, and 4). free from the limitation of Air/Fuel ratio. These catalysts could potentially find practical application in removal of NO in the exhaust gas of stationary plants and automobiles.

Example 1:

Pd/Al$_2$O$_3$ catalysts-mentioned in this invention were prepared by the following impregnation method. 10 grams of $\gamma$-Al$_2$O$_3$ were impregnated with 250 grams of an aqueous solution containing 0.112 grams of Pd(NO$_3$)$_2$ · 2H$_2$O. The resultant mixture was evaporated at 100°C and dried at 110°C overnight so as to obtain 0.5%Pd/Al$_2$O$_3$ catalyst.

Example 2:

A catalytic composite of the present invention was prepared as follows. 10 grams of $\gamma$-Al$_2$O$_3$ were impregnated with 250 grams of an aqueous solution containing 0.112 g Pd(NO$_3$)$_2$ · 2H$_2$O and 0.095 g Cu(NO$_3$)$_2$ · 3H$_2$O. The resultant mixture was evaporated at 100°C to obtain a catalyst designated as 0.5%Pd-0.25%Cu/Al$_2$O$_3$ catalyst.

Example 3:

A catalyst was prepared according to Example 2 except that the 0.95g of Cu(NO$_3$)$_2$ · 3H$_2$O were replaced by 0.009 g AgNO$_3$. Obtained sample was designated as 0.5% Pd- 0.06% Ag/Al$_2$O$_3$ catalyst.

Example 4:

A catalyst was prepared according to Example 2 except that 0.095 g Cu(NO$_3$)$_2$ · 3H$_2$O were replaced by 0.006 g H$_2$AuCl$_6$. Obtained sample was designated as 0.5% Pd- 0.03% Au/Al$_2$O$_3$ catalysts.

Example 5:

A catalyst was prepared according to Example 2 except that 10 grams of $\gamma$-Al$_2$O$_3$, 0.112 grams of Pd(NO$_3$)$_2$ · 2H$_2$O and 0.095 grams of Cu(NO$_3$)$_2$ · 3H$_2$O were replaced by 10 grams of MgAl$_2$O$_4$, 0.157 grams of Pd(NO$_3$)$_2$ · 2H$_2$O and 0.019 grams of Ce(NO$_3$)$_3$ · 6H$_2$O, respectively. Obtained sample was designated as 0.7%Pd-0.06%Ce/MgAl$_2$O$_4$ catalyst.

Example 6:

10 grams of $\gamma$-$Al_2O_3$ were impregnated with 250 grams of an aqueous solution containing 0.112 grams $Pd(NO_3)_2$ • $2H_2O$, 0.009 grams $AgNO_3$ and 0.059 grams $Ce(NO_3)_3$ • $6H_2O$. The resultant mixture was evaporated at 100°C so as to obtain a sample designated as 0.5%Pd-0.06%Ag-0.19%Ce/$Al_2O_3$ catalyst.

Example 7:

A catalyst was prepared according to Example 6 except that 0.059 grams of $Ce(NO_3)_3$ • $6H_2O$ were replaced by 0.016 grams $K_2CO_3$. The sample obtained was designated as 0.5%Pd-0.06% Ag-0.09%K/$Al_2O_3$ catalyst.

Example 8:

A catalyst was prepared according to Example 2 except that 0.095g of $Cu(NO_3)_2$ • $3H_2O$ were replaced by 0.032 g $Zr(NO_3)_3$. The sample obtained was designated as 0.5%Pd-0.13%Zr/$Al_2O_3$ catalyst.

## Tab. 1

| N2 Conversions  catalyst | temperature  600°C | 700°C | 800°C | 900°C |
|---|---|---|---|---|
| (I) 0.5% Pd/Al₂O₃ | 9.6 | 29.4 | 52.5 | 60.2 |
| (II) 1% Pd/Al₂O₃ | 5.9 | 29.8 | 62.5 | 75.0 |
| (III) 0.5% Pd-0.25% Cu /Al₂O₃. | 17.0 | 38.7 | 63.9 | 72.0 |
| (IV) 0.5% Pd-0.06% Ag '/Al₂O₃ | 19.2 | 35.6 | 59.0 | 72.6 |
| (V) 0.5% Pd-0.03% Au /Al₂O₃ | 16.1 | 37.2 | 63.1 | 75.2 |
| (VI) 0.5% Pd-0.06% Ag -0.19% Ce/Al₂O₃ | 23.5 | 51.6 | 64.6 | 75.5 |
| (VII) 0.5%Pd-0.06% Ag -0.09% K/Al₂O₃ | 22.7 | 34.6 | 57.8 | 72.6 |
| (VIII) 0.7%Pd/MgAl₂O₄ | 12.0 | 49.5 | 81.1 | 87.0 |
| (IX) 0.7% Pd-0.06% Ce /MgAl₂O₄ | 29.5 | 46.2 | 79.3 | 88.0 |
| (X) 0.5% Pd-0.13% Zr /Al₂O₃ | 16.9 | 35.6 | 54.7 | 66.4 |
| (XI) 2% Pd/Al₂O₃ | 3.8 | 23.6 | 52.4 | 58.3 |
| (XII) 0.25% Pd/Al₂O₃ | 2.7 | 20.8 | 41.3 | 56.7 |
| (XIII) 0.05% Pd/Al₂O₃ | 7.0 | 17.8 | 32.8 | 43.0 |

**Claims**

1. A catalyst for the thermal decomposition of NO comprising a support which is substantially either alumina ($Al_2O_3$) or magnesium aluminate ($MgAl_2O_4$) and an active phase of Pd crystallites of Pd alloy dispersed on the support, the Pd crystallites of the Pd alloy being modified by the addition of at least one alloying metal selected from group IB (Cu, Ag and Au).

2. The catalyst of claim 1, wherein the catalyst is suitable to be used for the removal of NO in the exhaust gas of stationary plants.

3. The catalyst of claim 1, wherein the catalyst is suitable to be used for the removal of NO in the exhaust gas of automobiles.

4. The catalyst of claim 1, wherein the palladium is present in the range of 0.05 to 2 weight percent of the alumina.

5. The catalyst of claim 1, wherein the palladium is present in the range of 0.1 to 1 weight percent of the magnesium aluminate.

6. The catalyst of claim 1, wherein the said alloying metal is present in an amount of 10 to 100, 5 to 10 and 2.5 to 10 weight percent of palladium for Cu, Ag and Au, respectively.

7. The catalyst of claim 1, wherein promoting metal oxides are present in an amount of 5 to 100, 10 to 100 and 10 to 100 weight percent of palladium for Ce, K and Zr, respectively.

**Patentansprüche**

1. Katalysator für den termischen Abbau von NO, umfassend einen Träger, bei dem es sich im wesentlichen entweder um Aluminiumoxid ($Al_2O_3$) oder Magnesiumaluminat ($MgAl_2O_4$) und eine aktive Phase von Pd-Kristalliten einer Pd-Legierung handelt, die auf dem Träger dispergiert ist, wobei die Pd-Kristallite der Pd-Legierung durch die Zugabe mindestens eines legierenden Metalls der Gruppe IB (Cu, Ag und Au) modifiziert ist.

2. Katalysator nach Anspruch 1, wobei der Katalysator sich zum Entfernen von NO in Abgasen stationärer Anlagen eignet.

3. Katalysator nach Anspruch 1, wobei sich der Katalysator zum Entfernen von NO im Abgas von Kraftfahrzeugen eignet.

4. Katalysator nach Anspruch 1, wobei das Palladium im Bereich von 0,05 bis 2 Gew.-% des Aluminiumoxids vorliegt.

5. Katalysator nach Anspruch 1, wobei das Palladium im Bereich von 0,1 bis 1 Gew.-% des Magnesiumaluminats vorliegt.

6. Katalysator nach Anspruch 1, wobei das legierende Metall in einer Menge von 10 bis 100, 5 bis 10 und 2,5 bis 10 Gew.-%, bezogen auf Palladium, für Cu, Ag oder Au vorliegt.

7. Katalysator nach Anspruch 1, wobei fördernde Metalloxide in einer Menge von 5 bis 100, 10 bis 100 und 10 bis 100 Gew.-%, bezogen auf Palladium, für Ca, K oder Zr vorhanden sind.

**Revendications**

1. Catalyseur de décomposition thermique de NO, comportant un support qui est essentiellement constitué soit d'alumine $Al_2O_3$, soit d'aluminate de magnésium $MgAl_2O_4$, et une phase active de cristallites de Pd en alliage de Pd dispersés sur le support, les cristallites de Pd en alliage de Pd étant modifiés par l'addition d'au moins un métal allié choisi dans le groupe IB (Cu, Ag et Au).

2. Catalyseur conforme à la revendication 1, lequel catalyseur est approprié pour être employé pour éliminer le NO présent dans les gaz d'échappement d'installations fixes.

3. Catalyseur conforme à la revendication 1, lequel catalyseur est approprié pour être employé pour éliminer le NO présent dans les gaz d'échappement d'automobiles.

4. Catalyseur conforme à la revendication 1, dans lequel le palladium se trouve en une proportion de 0,05 à 2 % en poids, par rapport à l'alumine.

5. Catalyseur conforme à la revendication 1, dans lequel le palladium se trouve en une proportion de 0,1 à 1 % en poids, par rapport à l'aluminate de magnésium.

6. Catalyseur conforme à la revendication 1, dans lequel ledit métal allié se trouve en une proportion de 10 à 100 %, 5 à 10 % ou 2,5 à 10 % en poids, par rapport au palladium, selon qu'il s'agit respectivement de Cu, Ag ou Au.

7. Catalyseur conforme à la revendication 1, dans lequel il y a des promoteurs qui sont des oxydes de métaux, qui s'y trouvent en une proportion de 5 à 100 %, 10 à 100 % ou 10 à 100 % en poids, par rapport au palladium, selon qu'il

6

s'agit respectivement de Ce, K ou Zr.

F : mass flow Controller

S : Six ports value

Fig. 1

Time On Stream (min)

$T=800°C$   $W/F=1.52$ g.s.cm$^{-3}$

Fig. 2